# EUROPEAN PATENT SPECIFICATION

(11) **EP 3 578 298 B1**
(45) Date of publication and mention of the grant of the patent: **03.03.2021**
(21) Application number: 19178514.6
(22) Date of filing: 05.06.2019
(51) Int. Cl.: B24C 1/08, B24C 3/32

(54) **METHOD FOR PRODUCING SYNTHETIC QUARTZ GLASS SUBSTRATE**
VERFAHREN ZUR HERSTELLUNG VON SYNTHETISCHEM QUARZGLASSUBSTRAT
PROCÉDÉ DE PRODUCTION D'UN SUBSTRAT EN VERRE À QUARTZ SYNTHÉTIQUE

(30) Priority: 05.06.2018 JP 2018107892
(43) Date of publication of application: 11.12.2019
(73) Proprietor: Shin-Etsu Chemical Co., Ltd., Tokyo (JP)
(72) Inventor: ISHITSUKA, Yoko, Joetsu-shi, Niigata (JP); WATABE, Atsushi, Joetsu-shi, Niigata (JP); TAKEUCHI, Masaki, Joetsu-shi, Niigata (JP)
(74) Representative: Mewburn Ellis LLP

(56) References cited:
- JP-A- 2000 246 641
- JP-A- 2004 306 219
- US-A- 3 520 086

## Description

### TECHNICAL FIELD

The present invention relates to methods for producing and processing synthetic quartz glass substrates.

### BACKGROUND

In the field of large-sized flat panel displays, more and more of the masks used have an enlarged area. In such a field, when a large-sized synthetic quartz glass substrate supplied as a raw material is produced, it is quite important to reduce the loss of raw material and the processing time during the slicing process of slicing a substrate from a block of synthetic quartz glass into a piece having a specific size, and the finishing process of finishing the piece to a synthetic quartz glass substrate having a high degree of flatness by polishing or the like.

When a synthetic quartz glass substrate is processed by sandblasting, as a processing characteristic of sandblasting, ridge portions extending along between a main surface of the substrate and a chamfer surface are liable to be removed. In a case where the amount removed by sandblasting is large, a phenomenon may be observed that the ridge parts are largely processed and removed. Because of this, the widths of the chamfers on different sides of the resulting substrate may not be the same, and/or the width of part of a chamfer may be increased even on the same side. Such a variation in the widths of the chamfers sometimes remains after polishing in the subsequent process. Practical problems may then be caused so that the resulting product is out of specification. In a worst case where the ridge portions with the chamfered surfaces are cut inwards too far, vacuum leakage occurs at the time of use of the mask for exposure and effective suction cannot be maintained.

In order to address such a problem, as a method of preventing local abrasion at ridge portions with chamfer surfaces of the substrate during sandblasting, our JP-A 2004-306219 proposed a method of suppressing the influence of deviated sandblast air flow by surrounding the substrate edge with plate-form structures or elements of abrasion-resistant polymer material e.g. polyurethane resin, projecting up - but not above a specific maximum height - relative to the substrate's main surface which is to be processed.

### THE INVENTION

In sandblasting, as well known, the processing amount is controlled and adjusted for each subsidiary region of the substrate surface by changing an air pressure and/or a retention time of a nozzle for each region of the synthetic quartz glass substrate. If there is a variation in the processing amount (thickness amount of material removal) in dependence on the position on the substrate, even under the same processing conditions, then the degree of flatness of the sandblast-processed substrate is worse and the processing time in subsequent process stages is prolonged. For example, in the method of JP-A 2004-306219, we note that when there are slight dimensional variations of the substrate, if a gap is formed between the plate structure element and a side surface (edge surface) of the substrate, the influence of air flow cannot be completely prevented. As a result, air and abrasive grains get around and into the gap so that the side surface parts (edge faces) of the substrate may be abraded, or there may be unintended variation in the processing amount on the main surface in the vicinity of the substrate edge.

On the other hand, if the plate structure elements and the substrate are brought into such close contact with each other that a gap cannot form, we find that scratches may be generated on the side surfaces of the substrate due to the contact. In order to remove these scratches, the processing time in the subsequent process may then be prolonged. The influence of such air flow also may not be suppressed when there are complicated processing conditions, for example, involving changing the air pressure of sandblasting by steps during the processing.

An aim herein is to provide new and useful methods for producing and processing synthetic quartz glass substrates using a sandblasting process, in which such undesired variations and their consequences can be reduced or avoided. In particular any of the noted variation in the processing amount at ridge parts between a surface of the substrate and chamfer surfaces, the abrasion at side surface parts of the substrate, and unwanted changes or variations in a chamfered shape and a side edge shape are desirably prevented.

The inventors have found that in processing the surface of the synthetic quartz glass substrate, especially the surface of the substrate which has been chamfered, by using sandblasting, spacers are arranged so as to be in contact with outer peripheral side surfaces of the substrate, and plate structure materials are arranged so as to be in contact with outer peripheral side surfaces of the spacers in a state of being protruded from a surface of the substrate, as a result of which the generation of a gap between the side surfaces of the substrate and the plate materials can be prevented, and the influence of the air flow can be effectively suppressed. Therefore, a variation in the processing amount in ridge parts between the surface of the substrate and the chamfered surfaces can be suppressed, and scratches are not generated on the side surfaces of the substrate due to the plate materials, so that the abrasion in the side surface parts of the substrate can be prevented, and the changes in the chamfered shape and the side shape can be suppressed.

The invention provides a method for producing a synthetic quartz glass substrate, comprising arranging a plate structure surrounding a synthetic quartz glass substrate, the plate structure protruding relative to a surface of the substrate to be processed, arranging spacers in contact with outer peripheral side surfaces of the substrate, the plate structure being in contact with outer peripheral side surfaces of the spacers, and sandblasting the surface of the substrate.

Preferred embodiments are given in the dependent claims.

Preferably, in the thickness direction, the spacers are as high as a thickness of the synthetic quartz glass substrate to be processed, or alternatively stated they stand at least as high as the level or plane of main surface of the substrate being processed, or they stand higher than that.

Preferably the spacers extend higher than the surface of the substrate by 10 mm or less.

Preferably, the spacers have a width of 5 to 15 mm.

Preferably, the synthetic quartz glass substrate to be processed has chamfer surfaces at peripheral parts of the surface of the substrate, and spacers, spacer portions or chamfer covers are arranged so as to be in contact with or to cover the chamfer surfaces, in addition to the contact and covering at the outer peripheral side surfaces of the substrate.

Preferably, the spacers are made of an elastic polymer compound or a nonwoven fabric which is stretchable in a width direction.

Preferably, the elastic polymer compound is selected from among silicone rubber, polyurethane rubber, neoprene rubber, and isoprene rubber.

### ADVANTAGEOUS EFFECTS

We find that by means of the present methods, local abrasion can be avoided on the side surfaces of the synthetic quartz glass substrate, and at the ridge parts between the surface of the substrate and chamfer surfaces where chamfer surfaces are present. As a result the risk of causing vacuum leakage, particularly during substrate suction at the time of exposure, can be reduced or prevented so that suction failure at the time of exposure can be avoided or eliminated.

### BRIEF DESCRIPTION OF THE DRAWINGS

FIGS. 1 (I) and (II) each shows an arrangement of a synthetic quartz glass substrate, spacer elements and plate elements or plate structure. FIG. 1 (I) is a plan view and FIG. 1(II) is a sectional view along the line ii-ii of FIG. 1 (I).
FIG. 2 is a sectional view showing an arrangement on a substrate holding table of a synthetic quartz glass substrate, spacers on side surfaces of the substrate, and the surrounding plate structure, also the positional relationships between the substrate, the spacers, the plate structure, and a processing tool.
FIG. 3 is a sectional view showing an arrangement on a substrate holding table of a synthetic quartz glass substrate, spacers on side surfaces of the substrate and on chamfer surfaces, and the plate structure, also the positional relationships between the substrate, the spacers, the plate structure, and a processing tool.
FIG. 4 is a fragmentary sectional view at a substrate edge showing a projection phenomenon caused by the absence of progression of the removal of a surface of the substrate in the vicinity of a ridge line.
FIG. 5 is a plan view showing an arrangement on a substrate holding table of a synthetic quartz glass substrate, spacers, and plate materials, and a positional relationship among the substrate, the spacers, the plate materials, and a processing tool.
FIG. 6 is a perspective view showing a moving direction of a processing tool.

### FURTHER EXPLANATIONS; OPTIONS AND PREFERENCES

The methods disclosed herein for producing a synthetic quartz glass substrate are applicable particularly to large-sized synthetic quartz glass substrates, which are preferably those used for producing a photomask substrate, an array side substrate of TFT liquid crystal, or the like. The substrate to be produced has a diagonal length of preferably 500 mm or more, and more preferably 500 to 2,000 mm. The shape of the substrate is not particularly limited, but may be a square, rectangular, circular, or the like. In a case of a circular shape, the diagonal length means a diameter of the circular shape. The thickness of the substrate is not particularly limited, and is preferably 1 to 20 mm, more preferably 1 to 15 mm, and even more preferably 5 to 12 mm.

The synthetic quartz glass substrates which may be processed include synthetic quartz glass substrates which have been chamfered at peripheral parts (along the periphery as known, by providing an inclined chamfer surface, e.g. at 45° to the main substrate surface, along what would otherwise be a right-angled edge join between the main substrate surface and the side edge surface), and substrates which have not been chamfered in peripheral parts. Of these, a synthetic quartz glass substrate which has been chamfered is most suitably used. With respect to synthetic quartz glass substrates which have been chamfered, a width of the chamfer surface is not particularly limited, but is preferably 0.3 to 1.5 mm.

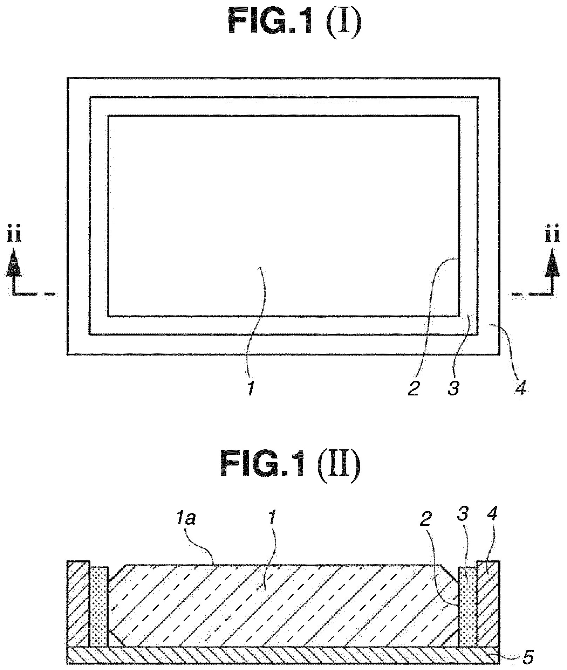

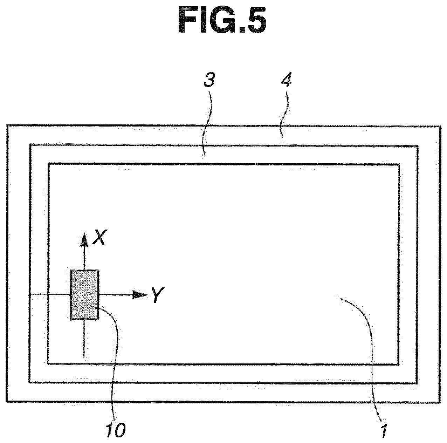

The surface (main face) of the synthetic quartz glass substrate is sandblasted. In the present process, e.g. as shown in FIGS. 1 (I) and 1(II), spacers 3 are arranged so as to be in contact along the entire outer peripheral side surfaces 2 (edge faces) of the synthetic quartz glass substrate 1 to be sandblasted, surrounding the substrate 1 as shown in Fig. 5. Then, plate-form structures, elements or materials 4 are arranged so as to be in contact with the entire outer peripheral side surfaces of the spacers, surrounding the spacers 3 and the substrate 1 as shown in Fig. 5. In this way the synthetic quartz glass substrate 1, surrounded by the plate elements 4 but with the spacers 3 intervening, is held fixed relative to a substrate holding table 5. The surface 1a of the synthetic quartz glass substrate 1 is sandblasted.

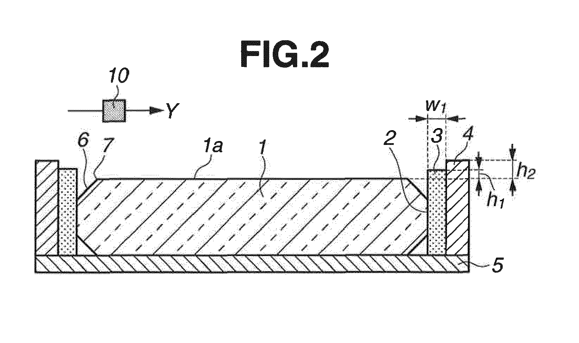

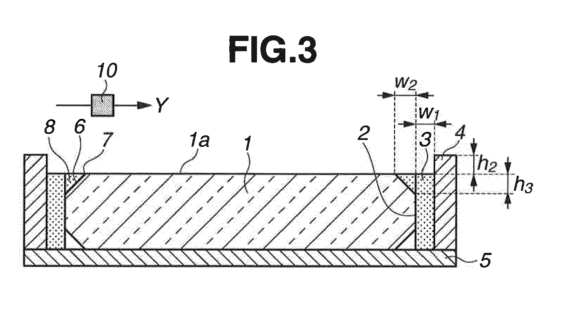

The spacers 3 to be in contact with the side surfaces 2 of the synthetic quartz glass substrate 1 may be or reach as high as a thickness (height) of the synthetic quartz glass substrate 1 to be processed (FIG. 1(II)) or may extend higher than the surface 1a of the substrate (FIG. 2). That is, higher relative to the level or plane of the surface 1a, as shown. In FIG. 2, when the spacers 3 are higher than the surface 1a of the substrate, the protrusion height h₁ is preferably 10 mm or less, more preferably 5 mm or less. The height h₁ is preferably 0 mm or more, that is, the spacers reach up at least high as the level of the surface 1a. If the height of the spacers is lower than the thickness (height) of the synthetic quartz glass substrate, abrasive grains may pass around the side surface parts of the synthetic quartz glass substrate which have no contact with the spacers, and local abrasion may be generated. On the other hand, if the protrusion height exceeds 10 mm, the air flow may collide against the spacers and the air flow around the air collision region may change, so that a variation in the processing amount (material removed) in the vicinity of the side surfaces of the synthetic quartz glass substrate may arise. As shown in Figs 3 and 5, the spacers 3 can have the form of strips e.g. of generally rectangular section form.

In FIG. 2, a width or thickness w₁ of the spacers which are arranged to be in contact with side surfaces of the synthetic quartz glass substrate is preferably 5 to 15 mm, and more preferably 8 to 12 mm. That is, width in the direction of the substrate plane, as shown. If the width of the spacers to be in contact with the side surfaces is smaller than 5 mm, due to the influence of the air hitting against the plate materials, or getting into a gap between the spacers and the substrate, or the like, such that the air flow around the plate materials and the spacers is changed, the intended processing amount (material removal rate) in the vicinity of the side surfaces of the substrate may be disturbed, and local abrasion may be generated. On the other hand, if the width of the spacers is larger than 15 mm, a repulsive or expansion force may be exerted when the spacers are brought into contact with the plate materials with no gap between, so that unnecessary force is applied to the synthetic quartz glass substrate when the synthetic quartz glass substrate is attached to a substrate holding table and when the synthetic quartz glass substrate is taken out from the substrate holding table. As a result, the workability may be deteriorated.

As shown in FIG. 3, spacers can also be arranged so as to be in contact also with chamfer surfaces 6 as well as with the outer peripheral side surfaces 2 of the substrate as needed. By arranging spacers 8 on the chamfer surfaces, abrasion of the ridge portions 7 between the surface of the substrate and the chamfer surfaces 6 can be reliably prevented. The spacers or chamfer covers 8 to be in contact with the chamfer surfaces are preferably adjusted depending on the width of the chamfers of the substrate and the angle of the chamfer surfaces, and are preferably shaped and arranged so as to be in contact with the entire chamfered surfaces and so as not to generate a gap with the spacers 3 that is in contact with the outer peripheral side surfaces of the substrate. They are shown as discrete from the main spacers 3. A width w₂ of the chamfer spacers or covers to be in contact with the chamfered surfaces is preferably 0.5 to 6 mm, more preferably 2 to 6 mm, and even more preferably 3 to 5 mm. From the viewpoint of preventing disturbance of the air flow in the vicinity of the substrate, which might be caused by air hitting against the spacers contacting with the chamfer surfaces, the chamfer spacers are preferably arranged so as to be as high as the spacers contacting the outer peripheral side surfaces of the substrate. That is, a height h₃ of the spacers to be in contact with the chamfered surfaces can be the same height as that of the spacers being in contact with the outer peripheral side surfaces of the substrate (and/or so as not to protrude above or from the surface 1a of the substrate).

Examples of the material for the spacers include elastic polymer compounds which are stretchable or deformable in a width direction, such as a silicone rubber, a polyurethane rubber, a neoprene rubber, and an isoprene rubber, and nonwoven fabrics made of synthetic resins such as polyester, polyethylene, and polypropylene. These materials can be used for the spacers to be arranged on the outer peripheral side surfaces of the substrate and also for any spacers to be arranged on the chamfer surfaces. The spacers may be provided as individual pieces for different parts of the substrate periphery. If the material for the spacers is a material like a metal, such a material is abraded by sandblasting with abrasive grains and a gap is generated. As a result, the air flow in the vicinity of the gap may be disturbed, control of the processing amount may become difficult, and foreign substances generated from the abrasion may hit against the processed substrate and cause scratches on the substrate.

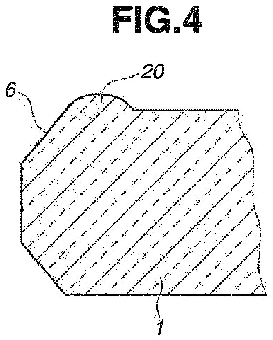

On the other hand, as shown in FIGS. 2 and 3, the plate-structure materials 4 are arranged so as to be higher than the height (thickness) of the synthetic quartz glass substrate 1 and so as to protrude above the level of the surface 1a of the synthetic quartz glass substrate 1. A protrusion height h₂ of the plate structure 4 from the surface 1a of the synthetic quartz glass substrate 1 is preferably 0.1 to 15 mm, and more preferably 0.3 to 10 mm. If the protrusion height h₂ is too low, abrasion at the ridge parts of the ridge portions 7 between the surface of the synthetic quartz glass substrate 1 and the chamfer surfaces 6 tends to occur and the object herein might not be adequately achieved. If the protrusion height h₂ is too high, abrasion in the ridge parts can be suppressed but removal of the main surface of the substrate in the vicinity of the ridge portions 7 may not progress adequately, so that a surface region of the substrate near the ridge becomes projected (FIG. 4), and such a projected part 20 may not be removable even by subsequent processing. In a case where such a projecting part 20 remains, leakage may be caused under vacuum suction subsequently.

From the viewpoint of avoiding shifting of the contact at the contact surface between the spacers and the substrate when the spacers are brought into contact with the outer peripheral side surfaces of the substrate, the plate structure materials are preferably at least as high as the spacers to be in contact with the outer peripheral side surfaces of the substrate, or higher than those. When the plate materials are arranged to be higher than the spacers, the difference between the height of the plate materials and the height of the spacers (h₂ - h₁) is preferably 10 mm or less, and more preferably 5 mm or less. The above difference is preferably 0 mm or more, and more preferably 0.2 mm or more.

The plate materials are preferably made of a material which is resistant to abrasion by sandblasting. Examples of such material include polyurethane resins, fluorine resins, and nylon resins.

Thus, typically the spacer material is more deformable or softer than the plate material, and may be resiliently deformable such as a rubber material, whereas the plate material may typically be hard, rigid or non-elastomeric.

When the synthetic quartz glass substrate and the plate materials are arranged, it is desired that the surrounding spacer and plate structures are arranged so as to be firmly brought into contact with each other and not to generate a gap. The spacer may optionally be compressed between the plate structure and the substrate edge. If a gap is generated, abrasive grains and the air enter the gap during sandblasting, the air flow in the vicinity of the gap is disturbed. As a result, local abrasion might be generated in side surface parts of the substrate.

As the method for sandblasting, any known method can be adopted. For example, as the abrasive grains, alumina abrasive grains, silicon carbide abrasive grains, or the like can be used. The particle diameter of the abrasive grains is not particularly limited and preferably #600 to #3000. The air pressure is also not particularly limited and preferably 0.01 to 0.3 MPa.

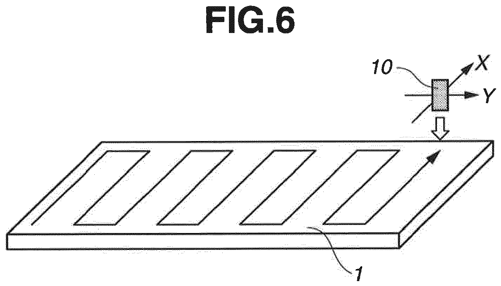

As the processing tool, for example, a tool shown in each of FIGS. 5 and 6 can be used. The processing tool 10 has a structure capable of arbitrarily moving in the X-axis and Y-axis directions. The movement can be controlled by a computer. The processing can be performed with an X-θ mechanism. Since the air pressure has a relationship with the abrasive grains to be used and the distance between the processing tool and the substrate, it cannot be particularly determined. But, it can be adjusted in consideration of the removal rate and the processing strain depth.

When sandblasting is performed in accordance with the present invention, sandblasting can be performed by storing height data in a computer on the basis of the degree of flatness data which have been measured in advance. Then, by controlling the retention time of the processing tool such that the movement speed of a processing tool is decreased and the retention time is increased in a high part, while the movement speed of the processing tool is conversely increased and the retention time is decreased in a low part.

Before and after the processing, the surface roughness (Ra) is measured on the chamfer surfaces and in the side surface parts of the substrate. In the measurement of the surface roughness, the roughness measuring instrument to be used is not particularly limited - it can be any general-purpose roughness measuring instrument known to the skilled person as suitable for this purpose. For example a roughness measuring instrument manufactured by Mitutoyo Corporation may be used.

In production methods using the present proposals, since only a high part of the substrate is selectively removed, a substrate having a low degree of flatness (high flatness value) can be reliably improved. Not only can a substrate having a high degree of flatness be obtained by precise control of the processing tool, but also an improvement of the degree of flatness of the substrate can be realized in a short period of time by rough or relatively simple control.

A synthetic quartz glass substrate obtained by the sandblasting of the present invention can be used as a photomask substrate, as an array-side substrate of a TFT liquid crystal, or the like. Typical steps for this include washing the synthetic quartz glass substrate, then forming a metal film, forming a resist film, drawing a circuit pattern with exposure, removing the resist film, and the like in accordance with the skilled person's knowledge.

### EXAMPLES

Examples of the invention are given below by way of illustration and not by way of limitation.

In the following Examples, the degree of flatness and the degree of parallelness were measured by using a flatness tester manufactured by KURODA Precision Industries Ltd. The surface roughness was measured by a roughness measuring instrument manufactured by Mitutoyo Corporation. A skilled person is familiar with measuring these parameters.

Presence or absence of scratches was confirmed by light-collective visual inspection in a dark room. When a bright spot or a bright line which can be clearly identified appears in a light-collected part, it is determined as "presence", and in a case where a bright spot or a bright line is not observed at a light-collected part, it is determined as "absence".

### Example 1

A synthetic quartz glass substrate having a size of 1,220 × 1,400 mm and a thickness of 13.6 mm was processed with a lapping device by using silicon carbide abrasive grains GC #600 manufactured by Fujimi Abrasives Manufacturing Co., Ltd. to prepare a raw-material substrate. At this time, an angle of chamfer surfaces was 45°, a width of chamfers was 0.9 mm, a degree of flatness of a surface was 80 µm, and a degree of parallelness was 4 µm. When side surface parts were inspected, the surface roughness (Ra) was 0.04 µm. There were no scratches which were able to be identified at the level of visual inspection.

As shown in FIG. 3, the obtained raw-material substrate was attached to a substrate holding table. At that time, silicone rubber pieces having a height of 13.6 mm which was the same as the thickness of the raw-material substrate and a width w₁ of 10 mm were arranged as spacers so as to be in contact along the four sides of the outer peripheral side surface of the raw-material substrate. Further silicone rubber pieces having a width w₂ of 0.9 mm which was the same as the width of the chamfers and a height h₃ of 3 mm were laid on to cover the chamfered parts and fixed with tape, to constitute chamfer spacers or chamfer covers. Then, the substrate was arranged on a holding table.

In the substrate holding table, plate elements made of a polyurethane resin material and having a height of 14.0 mm (h₂ = 0.4 mm) were arranged as plate structure so as to be in contact surrounding the outer peripheral side surfaces of the spacers.

As shown in FIG. 5, as the processing device, a processing device having a structure in which a sandblast nozzle being a processing tool 10 was attached to and rotatable by a motor (not shown) and a structure in which the processing tool was pressurized with the air was used. The sandblast nozzle had a structure in which the sandblast nozzle was movable substantially parallel to the substrate holding table in the X-axis and Y-axis directions.

Alumina abrasive grains FO #1000 (manufactured by Fujimi Abrasives Manufacturing Co., Ltd.) were used as the abrasive grains of a blasting material. The air pressure was set to 0.1 MPa. As the processing method, a method in which the sandblast nozzle being the processing tool 10 was continuously moved in parallel to the X-axis and moved in the Y-axis direction at a pitch of 30 mm as shown by the arrow in FIG. 6 was employed. The movement speed of the sandblast nozzle was set to 50 mm/sec in the lowest outer peripheral part of the substrate in a raw-material substrate shape. With respect to the movement speed in each part of the substrate, a required retention time of the sandblast nozzle in each part of the substrate was determined from the processing speed, the movement speed was calculated from the required retention time, and the processing position was moved by moving the sandblast nozzle, and thus the processing was performed on both sides. The removal amount of sandblasting in the highest position on the short side of the substrate was set to 100 µm, and the processing was performed.

After that, the synthetic quartz glass substrate was taken out and the surface roughness on each of the side surfaces and the chamfer surfaces was measured. Any scratches were identified in a dark room by light-collected visual inspection. The results are shown in Table 1.

### Example 2

Processing was performed in the same manner as in Example 1 except that a synthetic quartz glass substrate having a size of 1,220 × 1,400 mm and a thickness of 13.6 mm and which had not been chamfered was used as the raw-material substrate. Accordingly the further silicone rubber pieces for covering the chamfers used in Example 1 were not used. The side surfaces of the obtained synthetic quartz glass substrate were evaluated in the same manner as in Example 1. The results are shown in Table 1.

### Example 3

Processing was performed in the same manner as in Example 1 except that the air pressure at the time of sandblasting was set to 0.3 MPa. The side surfaces and the chamfered surfaces of the obtained synthetic quartz glass substrate were evaluated in the same manner as in Example 1. The results are shown in Table 1.

### Example 4

Processing was performed in the same manner as in Example 1 except that isoprene rubber pieces were used in place of the silicone rubber pieces as the spacers. The side surfaces and the chamfer surfaces of the obtained synthetic quartz glass substrate were evaluated in a similar manner as in Example 1. The results are shown in Table 1.

### Example 5

Processing was performed in the same manner as in Example 1 except that silicone rubber pieces having a height of 18.0 mm (h₁ = 4.4 mm) were used as the spacers, and the plate material made of a polyurethane resin and having a height of 20.0 mm (h₂ = 6.4 mm) was used. The side surfaces and the chamfer surfaces of the obtained synthetic quartz glass substrate were evaluated in the same manner as in Example 1. The results are shown in Table 1.

### Example 6

Processing was performed in the same manner as in Example 5 except that the air pressure at the time of sandblasting was set to 0.3 MPa. The side surfaces and the chamfer surfaces of the obtained synthetic quartz glass substrate were evaluated in the same manner as in Example 1. The results are shown in Table 1.

### Comparative Example 1

Processing was performed in the same manner as in Example 1 except that when the raw-material substrate was attached to the substrate holding table, no spacers were used to contact the outer peripheral side surfaces of the substrate and chamfered surfaces. The side surfaces and the chamfer surfaces of the obtained synthetic quartz glass substrate were evaluated in the same manner as in Example 1. The results are shown in Table 1.

**Table 1**

| | Before processing | | | | After processing | | | | Spacer | | |
|---|---|---|---|---|---|---|---|---|---|---|---|
| | Surface roughness (Ra) on side surfaces [µm] | Surface roughness (Ra) on chamfer surfaces [µm] | Scratches on side surfaces | Scratches on chamfer surfaces | Surface roughness (Ra) on side surfaces [µm] | Surface roughness (Ra) on chamfer surfaces [µm] | Scratches on side surfaces | Scratches on chamfer surfaces | Material | Height [mm] | h₁ [mm] |
| Example 1 | 0.04 | 0.04 | Absence | Absence | 0.04 | 0.04 | Absence | Absence | Silicone rubber | 13.6 | 0 |
| Example 2 | 0.04 | - | Absence | - | 0.04 | - | Absence | - | Silicone rubber | 13.6 | 0 |
| Example 3 | 0.04 | 0.04 | Absence | Absence | 0.04 | 0.04 | Absence | Absence | Silicone rubber | 13.6 | 0 |
| Example 4 | 0.04 | 0.04 | Absence | Absence | 0.04 | 0.04 | Absence | Absence | Isoprene rubber | 13.6 | 0 |
| Example 5 | 0.04 | 0.04 | Absence | Absence | 0.04 | 0.04 | Absence | Absence | Silicone rubber | 18.0 | 4.4 |
| Example 6 | 0.04 | 0.04 | Absence | Absence | 0.04 | 0.04 | Absence | Absence | Silicone rubber | 18.0 | 4.4 |
| Comparative Example 1 | 0.04 | 0.04 | Absence | Absence | 0.06 | 0.06 | Presence | Presence | Absence | | |

### Notes

In respect of numerical ranges disclosed in the present description it will of course be understood that in the normal way the technical criterion for the upper limit is different from the technical criterion for the lower limit, i.e. the upper and lower limits are intrinsically distinct proposals.

Although some preferred embodiments have been described, many modifications and variations may be made thereto in the light of the above teachings. It is therefore to be understood that the invention may be practised otherwise than as specifically described without departing from the scope of the appended claims.

## Claims

1. A method for producing a synthetic quartz glass substrate, comprising
arranging a plate structure (4) surrounding a synthetic quartz glass substrate (1), the plate structure protruding relative to a surface (1a) of the substrate to be processed, and
sandblasting the surface (1a) of the substrate (1),
**characterized by**:
arranging spacers (3) in contact with outer peripheral side surfaces (2) of the substrate (1), the plate structure (4) being in contact with outer peripheral side surfaces of the spacers (3).

2. A method according to claim 1, wherein the spacers (3) are at least as high as a thickness of the synthetic quartz glass substrate (1) to be processed, or are higher than said surface (1a) of the substrate.

3. A method according to claim 2, wherein the spacers (3) are higher than said surface of the substrate by 10 mm or less.

4. A method according to any one of claims 1 to 3, wherein the spacers (3) have a width of 5 to 15 mm.

5. A method according to any one of claims 1 to 4, wherein the synthetic quartz glass substrate to be processed has chamfer surfaces (6) along peripheral parts of said surface (1a) thereof, and chamfer spacers (8) are arranged in contact with the chamfer surfaces.

6. A method according to claim 5 wherein the width (w₂) of the chamfer spacers (8) is 0.5 to 6 mm.

7. A method according to any one of claims 1 to 6, wherein the spacers (3,8) are made of an elastic polymer compound or of a nonwoven fabric which is stretchable in a width direction.

8. A method according to claim 7, wherein the spacers (3) are made of an elastic polymer compound selected from silicone rubbers, polyurethane rubbers, neoprene rubbers and isoprene rubbers.

9. A method according to any one of the preceding claims wherein the plate structure (4) is as high as or higher than the spacers (3), and the difference (h₂ - h₁) between the height of the plate structure (4) and the height of the spacers (3) is 10 mm or less.

10. A method according to claim 9 wherein the difference (h₂ - h₁) between the height of the plate structure (4) and the height of the spacers (3) is 5 mm or less.

11. A method according to any one of the preceding claims wherein the material of the plate structure (4) is polyurethane resin, fluorine resin or nylon resin.

12. A method according to any one of the preceding claims wherein the substrate (1) is a large-sized substrate.

13. A method according to claim 12 wherein the substrate has a diagonal or diameter of 500 mm or more.

14. A method according to any one of the preceding claims wherein the substrate (1) is from 5 to 12 mm thick.

## Patentansprüche

1. Verfahren zur Herstellung eines synthetischen Quarzglassubstrats, wobei das Verfahren Folgendes umfasst:
das Anordnen einer Plattenstruktur (4), die ein synthetisches Quarzglassubstrat (1) umgibt, wobei die Plattenstruktur in Bezug auf einer Oberfläche (1a) des zu verarbeitenden Substrats vorsteht, und
das Sandstrahlen der Oberfläche (1a) des Substrats (1),
**gekennzeichnet durch**:
das Anordnen von Abstandshaltern (3) in Kontakt mit Außenumfangsseitenoberflächen (2) des Substrats (1), wobei die Plattenstruktur (4) in Kontakt mit Außenumfangsseitenoberflächen der Abstandshalter (3) steht.

2. Verfahren nach Anspruch 1, wobei die Abstandshalter (3) zumindest so hoch sind wie die Dicke des zu verarbeitenden synthetischen Quarzglassubstrats (1) oder höher sind als die Oberfläche (1a) des Substrats.

3. Verfahren nach Anspruch 2, wobei die Abstandshalter (3) um 10 mm oder weniger höher sind als die Oberfläche des Substrats.

4. Verfahren nach einem der Ansprüche 1 bis 3, wobei die Abstandshalter (3) eine Breite von 5 bis 15 mm aufweisen.

5. Verfahren nach einem der Ansprüche 1 bis 4, wobei das zu verarbeitende synthetische Quarzglassubstrat abgeschrägte Oberflächen (6) entlang von Umfangsteilen der Oberfläche (1a) desselben aufweist und abgeschrägte Abstandshalter (8) in Kontakt mit den abgeschrägten Oberflächen angeordnet sind.

6. Verfahren nach Anspruch 5, wobei die Breite (w₂) der abgeschrägten Abstandshalter (8) 0,5 bis 6 mm beträgt.

7. Verfahren nach einem der Ansprüche 1 bis 6, wobei die Abstandshalter (3, 8) aus einer elastischen Polymerverbindung oder einem Vlies bestehen, das in einer Breiterichtung dehnbar ist.

8. Verfahren nach Anspruch 7, wobei die Abstandshalter (3) aus einer elastischen Polymerverbindung bestehen, die aus Silikonkautschuken, Polyurethankautschuken, Neoprenkautschuken und Isoprenkautschuken ausgewählt ist.

9. Verfahren nach einem der vorangegangenen Ansprüche, wobei die Plattenstruktur (4) so hoch wie oder höher als die Abstandshalter (3) ist und die Differenz (h₂ - h₁) zwischen der Höhe der Plattenstruktur (4) und der Höhe der Abstandshalter (3) 10 mm oder weniger beträgt.

10. Verfahren nach Anspruch 9, wobei die Differenz (h₂ - h₁) zwischen der Höhe der Plattenstruktur (4) und der Höhe der Abstandshalter (3) 5 mm oder weniger beträgt.

11. Verfahren nach einem der vorangegangenen Ansprüche, wobei das Material der Plattenstruktur (4) Polyurethanharz, Fluorharz oder Nylonharz ist.

12. Verfahren nach einem der vorangegangenen Ansprüche, wobei das Substrat (1) ein groß dimensioniertes Substrat ist.

13. Verfahren nach Anspruch 12, wobei das Substrat eine Diagonale oder einen Durchmesser von 500 mm oder mehr aufweist.

14. Verfahren nach einem der vorangegangenen Ansprüche, wobei das Substrat (1) eine Dicke von 5 bis 12 mm aufweist.

## Revendications

1. Procédé de production d'un substrat en verre de quartz synthétique, comprenant
l'agencement d'une structure de plaque (4) entourant un substrat en verre de quartz synthétique (1), la structure de plaque faisant saillie par rapport à une surface (1a) du substrat devant être traité, et
le sablage de la surface (1a) du substrat (1),
**caractérisé par** :
l'agencement d'entretoises (3) en contact avec des surfaces latérales périphériques externes (2) du substrat (1), la structure de plaque (4) étant en contact avec des surfaces latérales périphériques externes des entretoises (3).

2. Procédé selon la revendication 1, dans lequel les entretoises (3) sont au moins aussi hautes qu'une épaisseur du substrat en verre de quartz synthétique (1) devant être traité, ou sont plus hautes que ladite surface (1a) du substrat.

3. Procédé selon la revendication 2, dans lequel les entretoises (3) sont plus hautes que ladite surface du substrat de 10 mm ou moins.

4. Procédé selon l'une quelconque des revendications 1 à 3, dans lequel les entretoises (3) ont une largeur de 5 à 15 mm.

5. Procédé selon l'une quelconque des revendications 1 à 4, dans lequel le substrat en verre de quartz synthétique devant être traité présente des surfaces de chanfrein (6) le long de parties périphériques de ladite surface (1a) de celui-ci, et des entretoises de chanfrein (8) sont agencées en contact avec les surfaces de chanfrein.

6. Procédé selon la revendication 5, dans lequel la largeur (w₂) des entretoises de chanfrein (8) est de 0,5 à 6 mm.

7. Procédé selon l'une quelconque des revendications 1 à 6, dans lequel les entretoises (3, 8) sont constituées d'un composé polymère élastique ou d'un tissu non tissé qui est étirable dans une direction de la largeur.

8. Procédé selon la revendication 7, dans lequel les entretoises (3) sont constituées d'un composé polymère élastique choisi parmi des caoutchoucs de silicone, des caoutchoucs de polyuréthane, des caoutchoucs de néoprène et des caoutchoucs d'isoprène.

9. Procédé selon l'une quelconque des revendications précédentes, dans lequel la structure de plaque (4) est aussi haute ou plus haute que les entretoises (3), et la différence (h₂ - h₁) entre la hauteur de la structure de plaque (4) et la hauteur des entretoises (3) est de 10 mm ou moins.

10. Procédé selon la revendication 9, dans lequel la différence (h₂-h₁) entre la hauteur de la structure de plaque (4) et la hauteur des entretoises (3) est de 5 mm ou moins.

11. Procédé selon l'une quelconque des revendications précédentes, dans lequel le matériau de la structure de plaque (4) est de la résine de polyuréthane, de la résine de fluor ou de la résine de nylon.

12. Procédé selon l'une quelconque des revendications précédentes, dans lequel le substrat (1) est un substrat de grande taille.

13. Procédé selon la revendication 12, dans lequel le substrat a une diagonale ou un diamètre de 500 mm ou plus.

14. Procédé selon l'une quelconque des revendications précédentes, dans lequel le substrat (1) fait de 5 à 12 mm d'épaisseur.
